(19) Europäisches Patentamt
European Patent Office
Office européen des brevets

(11) EP 0 962 476 B1

(12) **EUROPÄISCHE PATENTSCHRIFT**

(45) Veröffentlichungstag und Bekanntmachung des Hinweises auf die Patenterteilung:
**20.04.2005 Patentblatt 2005/16**

(51) Int Cl.[7]: **C08G 18/08**, C08G 18/12, C09D 175/00

(21) Anmeldenummer: **99109891.4**

(22) Anmeldetag: **20.05.1999**

(54) **Festkörperreiche Polyurethandispersionen mit hoher Applikationssicherheit**

High solids polyurethane dispersions with high security of application

Dispersions de polyuréthane à haute teneur en matières solides de grande sûreté d'application

(84) Benannte Vertragsstaaten:
**AT BE CH DE ES FR GB IT LI NL SE**

(30) Priorität: **02.06.1998 DE 19824484**

(43) Veröffentlichungstag der Anmeldung:
**08.12.1999 Patentblatt 1999/49**

(73) Patentinhaber: **Bayer MaterialScience AG**
**51368 Leverkusen (DE)**

(72) Erfinder:
- **Blum, Harald, Dr.**
  **51375 Leverkusen (DE)**
- **Hovestadt, Wieland, Dr.**
  **42799 Leichlingen (DE)**
- **Kahl, Lothar, Dr.**
  **FRACC Atizapan de Zaragoza (MX)**
- **Wicks, Douglas A. ,Dr.**
  **Pittsburgh, PA 15228 (US)**

(56) Entgegenhaltungen:
**EP-A- 0 407 798**
**EP-A- 0 546 375**
**EP-A- 0 792 899**
**WO-A-91/17196**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 962 476 B1

**Beschreibung**

Die Erfindung betrifft neue Dispersionen von Polyurethanen, ein Verfahren zur Herstellung sowie ihre Verwendung in Lacken und Beschichtungsmitteln.

Wäßrige Bindemittel auf Basis von hydrophil modifizierten Polyurethanen bzw. Polyurethan-Polyharnstoffen sind bekannt (z.B. Houben-Weyl, Methoden der organischen Chemie, Band E 20, S. 1659 (1987), Advances in Urethane Science and Technology", Vol. 10, S. 121-162 (1987), Ullmann's Encyclopedia of Industrial Chemistry, Vol. A 21, S. 677 (1992)).

Die bekannten wäßrigen Dispersionen führen in der Regel zu Lacken und Beschichtungsmitteln mit hochwertigem Eigenschaftsniveau, die je nach Zusammensetzung für unterschiedlichste Anwendungen geeignet sind. Das Spektrum erstreckt sich von harten, abriebfesten Lackfilmen, wie sie z.B. zur Fußbodenbeschichtung verwendet werden, bis hin zu weichen, hochelastischen Lackfilmen, die für Textilbeschichtungen geeignet sind.

Obwohl der Stand der Technik eine Vielzahl unterschiedlichster Polyurethandispersionen umfaßt, werden immer noch weiter verbesserte Polyurethane bzw. Polyurethan-Polyharnstoffe benötigt. Sie sollen hohe Molekulargewichte aufweisen, trotz hohem Gehalt an ionischen Gruppen Festkörpergehalte in Dispersionen von mindestens 40 % bei niedriger Viskosität ermöglichen und auch in stark verdünnter Form lagerstabil sind.

Die hohen Gehalte an ionischen Gruppen sind zur Erhöhung der Stabilität der Dispersionen bzw. der daraus formulierten Lacke erforderlich und stellen eine optimale Pigmentbenetzung sicher, so daß sehr gute filmoptische Eigenschaften erzielt werden können. Hohe Gehalte an ionischen Gruppen führen allerdings bei Dispersionen von hochmolekularen Polymeren in der Regel zu sehr niedrigen Feststoffgehalten. Hohe Molekulargewichte sind für solche Anwendungen unabdingbar, in denen nach der Applikation keine oder nur eine geringe chemische Vernetzungsreaktion erfolgt und trotzdem gute Beständigkeitseigenschaften gefordert sind. Für manche Anwendungsbereiche wie z.B. in Metallic-Basislacken oder in Holzlasuren werden Dispersionen häufig in stark verdünnter Form eingesetzt. Auch in dieser hohen Verdünnung muß eine gute Stabilität gewährleistet sein.

Es war die Aufgabe der Erfindung, entsprechende Polyurethandispersionen zur Verfügung zu stellen, die darüber hinaus eine schnelle Trocknung, ohne Zusatz organischer Lösemittel eine Mindestfilmbildungstemperatur < 0°C, sowie eine sehr gute Reinigungsfähigkeit (d.h. das Entfernen angetrockneter Polyurethanfilme oder Polymerreste bzw. Lackoverspray von Applikationsanlagen bzw. Applikationswerkzeugen) aufweisen sollen.

Gegenstand der Erfindung sind wäßrige Polyurethandispersionen aus Umsetzunssprodukten von

A) mindestens einem, mindestens difunktionellen Polyol des Molekulargewichtsbereiches 500-6000,

B) mindestens einem, mindestens difunktionellen niedermolekularen Alkohol,

C) mindestens einem, di- und/oder trifunktionellen Isocyanat und

D) mindestens einer Verbindung mit einer Säuregruppe und ein oder zwei Hydroxy- und/oder primäre bzw. sekundäre Aminogruppen in solch einer Menge, die eine Säurezahl bezogen auf Feststoffgehalt von 12 bis 27 mg KOH/g gewährleistet,

wobei vor dem Dispergieren für mindestens 65, höchstens 95 % der Säure-(Carboxyl)-Gruppen Neutralisierungsmittel, und nach dem Dispergieren und Beenden der Kettenverlängerungsreaktion in wäßriger Dispersion Neutralisationsmittel für dann insgesamt mindestens 115 % der Säuregruppen zugegeben wird.

Gegenstand der Erfindung ist auch ein Verfahren zur Herstellung der erfindungsgemäßen Polyurethandispersionen, dadurch gekennzeichnet, daß man aus den genannten Komponenten A), B), C) und D) gegebenenfalls in organischer Lösung zunächst ein NCO- und säurefunktionelles Polyurethanprepolymer herstellt, anschließend für mindestens 65, höchstens jedoch 95 % der Säuregruppen Neutralisationsmittel zugibt, das so erhaltene Prepolymer in Wasser dispergiert und nach Beenden der unter NCO-Wasser-Reaktion ablaufenden Kettenverlängerung durch Zugabe weiterer Neutralisationsmittel der Neutralisationsgrad auf mindestens 115 % erhöht wird.

Gegenstand der Erfindung ist auch die Verwendung der erfindungsgemäßen Polyurethandisperionen in Lakken und Beschichtungen.

Geeignete Komponente A) sind mindestens difunktionelle Polyester, Polyether, Polyetherpolyamine, Polycarbonate, Polyesteramide des Molekularbereiches 500-6000. Dies können sein Dihydroxypolyester aus Dicarbonsäuren bzw. deren Anhydriden, z.B. Adipinsäure, Bernsteinsäure, Phthalsäureanhydrid, Isophthalsäure, Terephthalsäure, Korksäure, Azelainsäure, Sebaceinsäure, Tetrahydrophthalsäure, Maleinsäureanhydrid, Dimerfettsäuren und Diolen, z.B. Ethylenglykol, Propylenglykol, 1,3- Propandiol, Diethylenglykol, Triethylenglykol, Butandiol-1,4, Hexandiol-1,6, Trimethylpentandiol, Cyclohexandiol-1,4, Cyclohexandimethanol-1,4, Neopentylglykol, Octandiol-1,8. Es können auch Polyester mitverwendet werden, die gegebenenfalls geringe Mengen (0,01 bis 10 Gew.-% mono-, tri- oder tetrafunktioneller Rohstoffe, wie z.B. 2-Ethylhexansäure, Benzoesäure, Sojaölfettsäure, Ölsäure, Stearinfettsäure, Sonnenblumenölfettsäure, Trimellithsäureanhydrid, Trimethylolpropan, Glycerin, Pentaerythrit enthalten.

Ebenfalls verwendet werden können Polyester auf Lacton-, insbesondere ε-Caprolactonbasis, Polycarbonate, wie sie durch Umsetzung beispielsweise der oben genannten Diole mit Diaryl- oder Dialkylcarbonaten oder Phosgen zugänglich sind, sowie Rizinusöl. Geeignet sind ebenfalls Polyether, wie sie z.B. unter Verwendung von Diolen, Triolen, Wasser oder Aminen als Startermolekül durch Polymerisation von Propylenoxid und/oder Tetrahydrofuran, gegebenenfalls unter Mitverwendung geringer Mengen Ethylenoxid und/oder Styroloxid erhalten werden können.

Vorzugsweise eingesetzte Komponenten A) sind difunktionelle Polyester bzw. Polycarbonate des Molekulargewichtsbereiches 840-2600.

Geeignete Komponenten B) können sein, z.B. Ethylenglykol, 1,4-Butandiol, 1,6-Hexandiol, Neopentylglykol, Trimethylolpropan, Glycerin, Ttrimethylpentandiol, Propylenglykol, 1,3-Propandiol, 1,4-Cyclohexadimethanol und Mischungen davon.

Vorzugsweise wird eine Mischung aus einem difunktionellen Alkohol B) wie z.B. Neopentylglykol, 1,4-Butandiol, 1,6-Hexandiol, Ethylenglykol mit einem trifunktionellen Alkohol wie Trimethylolpropan, Glycerin verwendet.

Geeignete Komponenten C) können sein di- und/oder trifunktionelle aliphatische Isocyanate wie z.B. Hexamethylendiisocyanat, Butandiisocyanat, Isophorondiisocyanat, 1-Methyl-2,4(2,6)-diisocyanatocyclohexan, Norbornandiisocyanat, Tetramethylxylylendiisocyanat, Hexahydroxylylendiisocyanat, Nonantriisocyanat, 4,4'-Diisocyanatodicyclohexylmethan. Ferner können aromatische Isocyanate wie z.B. 2,4(2,6)-Diisocyanatotoluol oder 4,4'-Diisocyanatodiphenylmethan sowie höhermolekulare bzw. oligomere Polyisocyanate des Molekulargewichtsbereiches 336 bis 1500, auf Basis der oben genannten aliphatischen Isocyanate und Mischungen davon eingesetzt werden.

Vorzugsweise werden 4,4'-Diisocyanatodicyclohexylmethan und/oder Isophorondiisocyanat und/oder Hexamethylendiisocyanat und/oder 1-Methyl-2,4(2,6)-diisocyanatocyclohexan eingesetzt.

Die Komponente D) besteht aus mindestens einer potentiell ionischen Verbindung mit mindestens einer Säuregruppe und mindestens einer gegenüber Isocyanatgruppen reaktionsfähigen Hydroxyl- und/oder Aminogruppe.

Vorzugsweise handelt es sich bei diesen Verbindungen um mindestens eine, vorzugsweise eine oder zwei Hydroxyl- und/oder Aminogruppen aufweisende Carbonsäure, beispielsweise 2,2-Bis(hydroxymethyl)alkancarbonsäure wie Dimethylolessigsäure, 2,2-Dimethylolpropionsäure, 2,2-Dimethylolbuttersäure oder 2,2-Dimethylolpentansäure, Dihydroxybernsteinsäure, Hydroxypivalinsäure oder um Gemische derartiger Säuren.

Besonders bevorzugt wird als Komponente D) Dimethylolpropionsäure und/oder Hydroxypivalinsäure verwendet. Ferner können gegebenenfalls Ethergruppen aufweisende Sulfonsäurediole z.B. der in US-A 4 108 814 beschriebenen Art als anionische Aufbaukomponente D) in Frage kommen. Die freien Säuregruppen stellen die vorstehend genannten potentiell ionischen" Gruppen dar, während es sich bei den durch Neutralisation mit Neutralisierungsgruppen erhaltenen salzartigen Gruppen, insbesondere Carboxylatgruppen, um ionischen"Gruppen handelt.

Komponente D) wird in solchen Mengen eingesetzt, daß die Säurezahl, bezogen auf Feststoffgehalt der Dispersion, bei 12 bis 27, vorzugsweise bei 15 bis 25 mg KOH/g Substanz liegt. Niedrigere Säurezahlen führen zu Dispersionen mit nicht ausreichender Lagerstabilität und/oder Reinigungsfähigkeit, höhere Säurezahlen ergeben nach Neutralisation Dispersionen mit sehr niedrigen Feststoffgehalten und führen in Lacken und Beschichtungen häufig zu nicht ausreichenden Wasserfestigkeiten.

Zusätzlich zu den Aufbaukomponenten A), B), C), D) kann gegebenenfalls in geringem Umfang auch Komponente E) bei der Herstellung der Polyurethandispersion mitverwendet werden. Komponenten E) können nichtionischhydrophile Polyether sein, die pro Molekül eine oder zwei gegenüber Isocyanatgruppen reaktionsfähige Gruppen, insbesondere Hydroxylgruppen aufweisen.

Die Polyetherkette dieser Verbindungen bestehen mindestens zu 70 % aus Ethylenoxideinheiten. Geeignete Komponenten E) sind z.B. mono- oder difunktionelle Polyethylenglykolmonoalkylether mit Molekulargewichten von 350 bis 2500.

Die erfindungsgemäßen, wasserdispergierbaren Polyurethane sind vorzugsweise Umsetzungsprodukte von

A) 45 bis 75 Gew.-% mindestens eines mindestens difunktionellen Polyols des Molekulargewichtsbereiches 500 bis 6000,

B) 1 bis 6 Gew.-% mindestens eines mindestens difunktionellen niedermolekularen Alkohols mit Molekulargwicht <350,

C) 20 bis 45 Gew.-% mindestens eines di- und/oder trifunktionellen Isocyanates,

D) 3 bis 7 Gew.-% Dimethylolpropionsäure und/oder Dimethylolbuttersäure und/oder Hydroxypivalinsäure sowie

E) 0 bis 5 Gew.-% nichtionisch-hydrophilen, monofunktionellen Polyethylenglykolmonoalkylethern mit Molekulargewichten von 350 bis 2500.

Ganz besonders bevorzugt sind Umsetzungsprodukte aus

A) 50 bis 70 Gew.-% mindestens eines difunktionellen Polyesters und/oder Polycarbonates des Molekulargewichtsbereiches 840 bis 2600,

B) 1 bis 4 Gew.-% einer Mischung eines difunktionellen und eines trifunktionellen, niedermolekularen Alkohols mit Molekulargewichten < 210,

C) 25 bis 40 Gew.-% Isophorondiisocyanat, und/oder Hexamethylendiisocyanat und/oder 4,4-Diisocyanatodicyclohexylmethan sowie

D) 4 bis 6 Gew.-% Dimethylolpropionsäure und/oder Hydroxypivalinsäure.

Die Umsetzung der hydroxyfunktionellen Komponenten A), B), D) und gegebenenfalls E) mit der isocyanatfunktionellen Komponente C) erfolgt in an sich bekannter Art und Weise ein- oder mehrstufig. Die Mengenverhältnisse der Reaktionspartner werden so gewählt, daß das Äquivalentverhältnis von NCO:OH-Gruppen bei 2,2:1 bis 1,25:1, vorzugsweise bei 1,7:1 bis 1,4:1 liegt. Die Reaktion kann unter Zusatz geringer Mengen Katalysatoren wie z.B. Dibutylzinndilaurat, Zinn-2-octoat, Dibutylzinnoxid oder Diazabicyclononan durchgeführt werden.

Zur Vermeidung von Viskositäts-, Rühr-, Misch- und Wärmeabfuhrproblemen wird die Reaktion vorzugsweise in 45 bis 95 %iger organischer Lösung, besonders bevorzugt in 50 bis 80 %iger acetonischer Lösung durchgeführt.

Vor dem Dispergieren des organisch gelösten, NCO-funktionellen Polyurethanpolymeres wird für mindestens 65, vorzugsweise mindestens 75 %, höchstens jedoch 95 % der Säuregruppen Neutralisationsmittel zugesetzt.

Geeignete Neutralisationsmittel für die Zugabe an dieser Stelle können sein z.B. Triethylamin, N-Methylmorpholin, Dimethylisopropylamin, Kaliumhydroxid oder Natriumhydroxid.

Nach dem Dispergieren des Polyurethanprepolymeres in/durch Wasser wird solange gerührt, bis sämtliche NCO-Gruppen durch NCO-Wasserreaktion unter Kettenverlängerung abreagiert haben. Dann wird soviel Neutralisationsmittel nachgegeben, daß der Neutralisationsgrad bezogen auf eingebaute Säuregruppen mindestens 115, vorzugsweise >150 und ganz besonders bevorzugt >165 % beträgt. Für die Zugabe an dieser Stelle geeignete Neutralisationsmittel sind neben den bereits oben genannten z.B. Dimethylethanolamin, Ammoniak, Morpholin, Methyldiethanolamin, Aminomethylpropanol, Triethanolamin oder Ethanolamin.

Vorzugsweise enthalten die Dispersionen Mischungen bzw. Kombinationen unterschiedlicher Neutralisationsmittel, wie z.B. Triethylamin oder Dimethylisopropylamin gemischt mit Dimethylethanolamin oder Aminomethylpropanol. Aufgrund der unterschiedlichen Wassermischbarkeit und Flüchtigkeit der verschiedenen Neutralisationsmittel in der Dispersion werden besonders günstige Applikations- und Trocknüngseigenschaften erhalten.

Die zur Herstellung des Polyurethanprepolymers eingesetzten Lösemittel können teilweise bzw. vorzugsweise ganz aus der Dispersion durch Destillation abgetrennt werden. Besonders bevorzugt enthält die erfindungsgemäße Dispersion keine organischen Lösemittel. Die Destillation erfolgt vorzugsweise so, daß kein eingesetztes Neutralisationsmittel mit abdestilliert wird. Gegebenenfalls abdestilliertes Neutralisationsmittel wird durch eine Zugabe einer entsprechenden Menge Neutralisationsmittel zu der Dispersion anschließend wieder ergänzt.

Bei der Kettenverlängerung des NCO-funktionellen Polyurethanprepolymers in Wasser können gegebenenfalls für bis zu 40 % der vorhandenen NCO-Gruppen mono-, dioder trifunktionelle Kettenverlängerungs- bzw. Kettenabbruchmittel der bekannten Art, die gegebenenfalls auch ionische Gruppen, Säuregruppen oder Hydroxylgruppen enthalten können, zugesetzt werden. Vorzugsweise wird jedoch ausschließlich eine Kettenverlängerung über die NCO-Wasserreaktion durchgeführt.

Die erfindungsgemäßen Dispersionen haben einen (rechnerisch ermittelbaren und auf 100 % Feststoffgehalt bezogenen) Gehalt an isolierten Harnstoffstruktureinheiten, von 1,0 bis 4,0%, vorzugsweise von 1,75 bis 3,25%, die in Formel (I) in eckiger Klammer wiedergegeben sind:

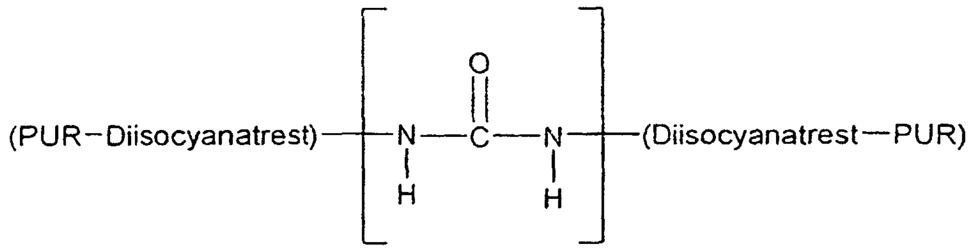

(I).

Die Berechnung erfolgt unter der Annahme, daß die Hälfte der NCO-Gruppen des Polyurethanpropolymeres mit Wasser unter $CO_2$-Abspaltung zu Aminogruppen abreagieren, welche dann mit der 2. Hälfte der NCO-Gruppen unter Bildung von isoliert stehenden Monoharnstoffbrücken unter Molekulargewichtserhöhung reagieren.

Kumulierte Harnstoffstruktureinheiten, die in Formel (II) in eckiger Klammer wiedergegeben sind, sind in den erfindungsgemäßen Dispersionen vorzugsweise nicht enthalten:

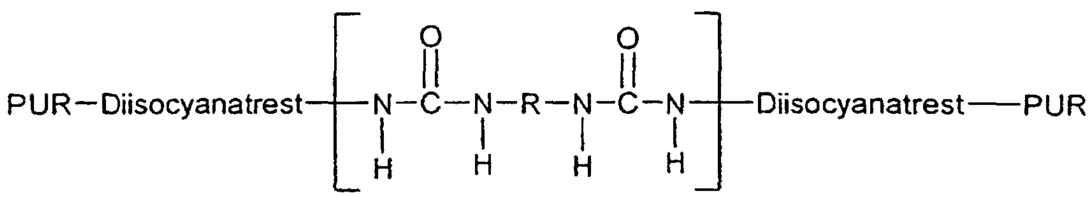

(wobei R ein Kohlenwasserstoffrest z.B. von einem niedermolekularen Diamin mit 2 bis 10 C-Atomen darstellt)

Die erfindungsgemäßen Dispersionen weisen Teilchendurchmesser (bestimmt z.B. durch LKS-Messungen) von 20 bis 600, vorzugsweise von 50 bis 150 nm auf.

Der Festkörpergehalt der Dispersionen beträgt bei Viskositäten von 10 bis 100 sek. Auslaufzeit (DIN-4-Becher, 23°C) mindestens 35, vorzugsweise mindestens 40 %. Der pH-Wert der Dispersion liegt bei mindestens 7,5, vorzugsweise bei mindestens 8,5. Die Molekulargewichte Mw der Dispersion liegen bei >25 000, vorzugsweise >50 000 (bestimmt z.B. durch Gelpermeationschromatographie).

Die erfindungsgemäßen Produkte sind zur Beschichtung bzw. Lackierung beliebiger Substrate, insbesondere Holz, Keramik, Stein, Beton, Bitumen. Hartfaser, Glas, Porzellan, Kunststoffen der verschiedensten Art geeignet. Weiterhin sind sie einsetzbar als Finish oder Appretur bei der Textil- und Lederbeschichtung. Besonders bevorzugte Einsatzgebiete sind solche, bei denen es auf gute Pigmentbenetzung, geeignetes Rheologieverhalten, hohes Molekulargewicht, Viskositäts- und Lagerstabilität auch in verdünnter Lösung sowie gute Reinigungsfähigkeit der verwendeten Geräte und Anlagen ankommt, wie z.B. die Autoreparatur- und Autoserienlackierung, insbesondere mit Uni- oder Metallic-Basislacken.

Die Dispersionen können mit anderen ionischen oder nichtionischen Dispersionen gemischt werden, z.B. mit Polyvinylacetat-, Polyethylen-, Polystyrol-, Polybutadien, Polyurethan-, Polyvinylchlorid-, Polyacrylat- und Copolymerisat-Kunststoff-Dispersionen. Auch der Zusatz von an sich bekannten, chemisch nicht fixierten, vorzugsweise ionischen Emulgatoren ist möglich.

Zur erfindungsgemäßen Verwendung der erfindungsgemäßen Dispersionen können diesen die üblichen Hilfs- und Zusatzmittel zugesetzt werden. Hierzu gehören beispielsweise Vernetzungsmittel wie Carbodiimide, Polyisocyanate, blockierte Polyisocyanate, teilweise oder ganz veretherte Melaminharze, Pigmente, Metallic-Pigmente auf der Basis von Aluminiumflocken; Füllstoffe wie beispielsweise Ruß, Kieselsäure, Talkum, Kaolin, Titandioxid, Glas als Pulver oder in Form von Fasern, Cellulose, Celluloseacetobutyrat, Additive wie z.B. Verlaufshilfsmittel, Stabilisatoren zur Verbesserung der Bewitterungsstabilität, Verdicker, Antiabsetzmittel.

Die Verarbeitung der Dispersion zur Herstellung von Überzügen kann nach beliebigen Methoden, beispielsweise durch Streichen, Gießen, Sprühen, Tauchen, Walzen oder Rakeln, erfolgen.

Die Trocknung der nach verschiedenen Applikationstechniken erhaltenen Produkte kann bei Raumtemperatur oder bei erhöhter Temperatur bei 200°C, vorzugsweise bei 60-150°C erfolgen.

## Beispiele

In den nachfolgenden Beispielen beziehen sich alle Prozentangaben auf Gewichtsprozente. Alle Angaben in

Teilen" beziehen sich auf Gewichtsteile. Die Angaben zu den Molekulargewichten der Polymerdiolkomponenten sind mittlere Molekulargewichte.

**Beispiel 1**

In einem 10-1-Reaktionsgefäß mit Rühr-, Kühl-, und Heizvorrichtung werden 1340 g eines Polycarbonatdiols (Molekulargewicht 2000, Basis Hexandiol/ε-Caprolacton), 900 g eines Polyesterdiols (Molekulargewicht 2000, Basis Adipinsäure/Neopentylglykol), 180 g Dimethylolpropionsäure, 31,7 g 1,4-Butandiol und 62,2 g Trimethylolpropan eingewogen, in 1700 g Aceton gelöst und mit 1018 g Isophorondiisocyanat und 177 g 4,4'-Dicyclohexylmethandiisocyanat solange bei Rückflußtemperatur umgesetzt, bis der theoretische NCO-Wert erreicht ist. Dann werden 121 g Triethylamin und 5200 g Wasser zugegeben und bei 50°C solange gerührt, bis keine NCO-Gruppen mehr nachweisbar sind. Anschließend werden 121 g Triethylamin zugegeben und das Aceton abdestilliert. Man erhält eine niedrigviskose 42 %ige Dispersion 1), deren Wert pH-Wert 9,6 beträgt. Die Neutralisationsmittelmenge bezogen auf die Menge der Carboxylgruppen vor dem Dispergieren beträgt 89 %, in der fertigen Dispersion 178 %. Die Säurezahl bezogen auf Feststoffgehalt beträgt ca. 20 mg KOH/g Substanz. Der Anteil an isolierten Harnstoffgruppen beträgt 2,7 %, bezogen auf Feststoffgehalt der Dispersion.

**Vergleichsbeispiel 2**

Beispiel 1 wird wiederholt, mit dem Unterschied, daß die komplette Menge Neutralisationsmittel (242 g Triethylamin, dies entspricht bezogen auf die Carboxylgruppen einer Menge von 178 %) vor dem Dispergieren zugesetzt wird. Nach Beendigung der Kettenverlängerungsreaktion wird das Aceton destillativ abgetrennt. Um eine Dispersion mit vergleichbarer Viskosität wie in Beispiel 1 zu erhalten, muß soviel Wasser zugesetzt werden, daß der Festkörpergehalt der Dispersion auf 30 % abfällt.

**Beispiel 3**

In einem 10 l-Reaktionsgefäß mit Rühr-, Kühl-, und Heizvorrichtung werden 2240 g eines Polyesterdiols (Molekulargewicht 2000, Basis Adipinsäure/Hexandiol/Neopentylglykol), 43,2 g Butandiol, 180 g Dimethylolpropionsäure und 62,2 g Trimethylolpropan eingewogen, in 1300 g Aceton gelöst und dann mit 1261 g Isophorondiisocyanat solange umgesetzt, bis der theoretische NCO-Wert erreicht ist. Dann werden 113 g Triethylamin und 4650 g destilliertes Wasser zugegeben und bei 50°C solange gerührt, bis keine NCO-Gruppen mehr nachweisbar sind. Dann werden 122,5 g Dimethylethanolamin zugegeben und das Aceton abdestilliert. Man erhält eine 45 %ige Dispersion 3), deren pH-Wert 9,6 beträgt. Die Neutralisationsmittelmenge bezogen auf die Menge der Carboxylgruppen beträgt insgesamt 186 %. Die Säurezahl bezogen auf Feststoffgehalt beträgt ca. 20 mg KOH/g Substanz. Der Anteil an isolierten Hamstoffgruppen beträgt 3,1 %, bezogen auf den Feststoffgehalt der Dispersion.

**Beispiel 4**

In einem 10 l-Reaktionsgefäß mit Rühr-, Kühl-, und Heizvorrichtung werden 800 g eines Polyesterdiols (Molekulargewicht 2000, Basis Phthalsäureanhydrid/Hexandiol), 1224 g eines Polyesterdiols (Molekulargewicht 1700, Basis Adipinsäure/Hexandiol/Neopentylglykol), 139,4 g Dimethylolpropionsäure, 49,1 g Hydroxypivalinsäure, 19 g 1,6-Hexandiol und 93,8 g Trimethylolpropan vorgelegt und in 1070 g Aceton gelöst. Dann werden 1389 g Desmodur W zugegeben und solange bei Rückfluß gerührt, bis der theoretische NCO-Wert ereicht ist. Dann werden 130 g Triethylamin und 4800 g Wasser zugegeben und bei 50°C solange grührt, bis keine NCO-Gruppen mehr nachweisbar sind. Anschließend werden 106 g 2-Amino-2-methyl-1-propanol zugegeben und das Aceton abdestilliert. Man erhält eine 42 %ige Dispersion 4), deren Wert 9,3 beträgt. Die Neutralisationsmittelmenge bezogen auf die Menge der Carboxylgruppen beträgt insgesamt 170 %. Die Säurezahl bezogen auf Feststoffgehalt beträgt ca. 22 mg KOH/g Substanz. Der Gehalt an isolierten Harnstoffgruppen beträgt 2,6 %, bezogen auf den Feststoffgehalt der Dispersion.

**Vergleichsbeispiel 5**

Beispiel 1 wird wiederholt, mit dem Unterschied, daß als 1. Neutralisationsmittelmenge 80,5 g Triethylamin und als 2. Neutralisationsmittelmenge 72 g Triethylamin zugegeben werden. Dies entspricht im 1. Schritt einer Neutralisationsmittelmenge von 60 % bezogen auf die Menge an Carboxylgruppen. Insgesamt beträgt die Neutralisationsmittelmenge 112 %. Man erhält eine 42 %ige Dispersion 5), deren pH-Wert 9,3 beträgt.

**Vergleichsbeispiel 6**

Beispiel 1 wird wiederholt, mit dem Unterschied, daß auf die Zugabe der 2. Neutralisationsmittelmenge verzichtet wird. Man erhält eine 42 %ige Dispersion 5), deren pH-Wert 7,5 beträgt. Die Neutralisationsmittelmenge bezogen auf die Menge der Carboxylgruppen beträgt 89 %.

**Vergleichsbeispiel 7**

In einem 10 l-Reaktionsgefäß mit Rühr-, Kühl-, und Heizvorrichtung werden 996 g eines Polyesterdiols (Molekulargewicht 2000, Basis Adipinsäure/Hexandiol/Neopentylglykol), 996 g eines Polycarbonatdiols (Molekulargewicht 2000, Basis Hexandiol/ε-Caprolacton) 69 g Dimethylolpropionsäure (entspricht einer Menge von 2,25 % an Komponente D) bezogen auf den Feststoffgehalt des Umsetzungsproduktes aus A), B), C) und D)), 54 g Butandiol und 46,8 g Trimethylolpropan eingewogen, in 1464 g Aceton gelöst und dann mit 877 g Isophorondiisocyanat solange umgesetzt, bis der theoretische NCO-Wert erreicht ist. Dann werden 46,2 g Triethylamin und 4131 g destilliertes Wasser zugegeben und bei 50°C solange grührt, bis keine NCO-Gruppen mehr nachweisbar sind. Dann werden 40,2 g 2-Amino-2-methyl-1-propanol zugegeben und das Aceton abdestilliert. Man erhält eine 42 %ige Dispersion 7), deren pH-Wert 9,4 beträgt. Die Neutralisationsmittelmenge bezogen auf die Menge an Carboxylgruppen beträgt insgesamt 177 %. Die Säurezahl bezogen auf Feststoffgehalt beträgt ca. 9 mg KOH/g Substanz. Die Dispersion besitzt eine sehr schlechte Lagerstabilität, bereits nach einigen Tagen Lagerung bei Raumtemperatur tritt Phasentrennung auf.

**Vergleichsbeispiel 8**

In einem 20 l-Reaktionsgefäß mit Rühr-, Kühl-, und Heizvorrichtung werden 900 g eines Polyesterdiols (Molekulargewicht 2000, Basis Adipinsäure/Hexandiol/Neopentylglykol), 900 g eines Polycarbonatdiols (Molekulargewicht 2000, Basis Hexandiol/ε-Caprolacton) 279,6 g Dimethylolpropionsäure (entspricht einer Menge von 7,7 % an Komponente D) bezogen auf den Feststoffgehalt des Umsetzungsproduktes aus A), B), C) und D)), 16,2 g Butandiol und 70,2 g Trimethylolpropan eingewogen, in 1680 Aceton gelöst und dann mit 1315 g Isophorondiisocyanat solange umgesetzt, bis der theoretische NCO-Wert erreicht ist. Dann werden 187,2 g Triethylamin und 4540 g destilliertes Wasser zugegeben. Man erhält eine hochviskose Dispersion, der weitere 7040 g Wasser zugegeben werden, um sie gewünschte niedrige Viskosität zu erhalten, anschließend wird bei 50°C solange gerührt, bis keine NCO-Gruppen mehr nachweisbar sind. Dann werden 165 g 2-Amino-2-methyl-1-propanol zugegeben und das Aceton abdestilliert. Man erhält eine 22,5 %ige Dispersion 8), deren pH-Wert 9,6 beträgt. Die Neutralisationsmittelmenge bezogen auf die Menge an Carboxylgruppen beträgt insgesamt 179 %. Die Säurezahl bezogen auf Feststoffgehalt beträgt ca. 32 mg KOH/g Substanz.

Prüfung der Lagerstabilität der Dispersionen

Bei der Prüfung der Lagerstabilität der Dispersionen wurden solche, die keine Phasenseparierung zeigten und bei denen auch keine Sedimentierung (Bildung von Bodensatz) zu beobachten war, als "in Ordnung" bezeichnet.

a) 1:1 Verdünnen mit Wasser und Lagerung bei Raumtemperatur für 1 Woche:

Dispersion 1) in Ordnung
Dispersion 2) in Ordnung
Dispersion 3) in Ordnung
Dispersion 4) in Ordnung
Dispersion 5) leichter Bodensatz
Dispersion 6) Bodensatz
Dispersion 7) Bodensatz, zweiphasig
Dispersion 8) in Ordnung

b) Lagerung der Originaldispersion bei 50°C für 1 Woche:

Dispersion 1) in Ordnung
Dispersion 2) in Ordnung
Dispersion 3) in Ordnung
Dispersion 4) in Ordnung
Dispersion 5) leichter Bodensatz
Dispersion 6) Bodensatz

Dispersion 7) starker Bodensatz, zweiphasig
Dispersion 8) in Ordnung

Prüfung der Reinigungsfähigkeit

Dazu werden Filme (90 µm naß) der Dispersionen auf Glasplatten aufgezogen und 40 Minuten bei 21°C/20 % relativer Luftfeuchte getrocknet. Auf die schräg gestellten Glasplatten werden dann 2 ml einer Reinigungslösung (Mischung aus 90 % Wasser, 9,2 % Butylglykol und 0,8 % Dimethylethanolamin) aufgetropft und das Löseverhalten während des Zutropfens bzw. die Glasoberfläche nach ca. 15 Minuten beurteilt.

Die Beurteilung erfolgt anhand folgender Kriterien (1-5; 1 = bester Wert, 5 = schlechtester Wert):

1: Film löst sich beim Zutropfen sofort auf, es bleibt kein Rest/Film auf der Fläche zurück.

2: Film löst sich beim Zutropfen langsam auf, es bleibt kaum Rest/Film auf der Fläche zurück.

3. Film löst sich beim Zutropfen nur teilweise auf, es bleiben Reste/bzw. ein dünner Film auf der Fläche.

4. Film löst sich beim Zutropfen nur teilweise auf, es bleiben erhebliche Reste auf der Fläche zurück.

5. Film löst sich beim Zutropfen kaum auf, nur geringe Menge werden abgelöst.

Dispersion 1) 1
Dispersion 2) 2
Dispersion 3) 1
Dispersion 4) 1
Dispersion 5) 5
Dispersion 6) 3
Dispersion 7) 3
Dispersion 8) 1

Die erfindungsgemäßen Dispersionen 1), 3) und 4) zeigen sowohl in verdünnter als auch in Originalform eine gute Lagerstabilität. Sie weisen eine sehr gute Reinigungsfähigkeit auf. Trotz eines hohen Carboxylgruppen- und Neutralisationsmittelgehaltes, bei gleichzeitig hohen pH-Werten und hohen Molekulargewichten liegen die Feststoffgehalte der Dispersionen bei gleichzeitig sehr niedriger Viskosität (< 30 s Auslaufzeit, 23°C, DIN 4 Becher) über 40 %, und ermöglichen so eine wirtschaftliche Herstellung und vielfältige Anwendungen in Bereichen, in denen die typischen hochwertigen Eigenschaften von Polyurethandispersionen (wie z.B. Härte, Elastizität, Licht- und Wetterstabilität, rasche Trocknung, hohe Schichtstärken) verlangt werden.

Die Vergleichsdispersionen 2) bzw. 8) zeigen eine gute Lagerstabilität. Sie sind jedoch aufgrund ihres sehr niedrigen Feststoffgehaltes von 30 bzw. 22,5 % zum einen unwirtschaftlich in der Herstellung, zum anderen für viele Anwendungsbereiche, in denen höhere Feststoffgehalte vorteilhaft sind, weniger gut geeignet. Der niedrige Feststoffgehalt limitiert z.B. die in einem Filmauftrag erzielbaren, störungsfreien Trockenfilmstärken ganz erheblich, Die Reinigungsfähigkeit der Vergleichsdispersion 2) ist etwas schlechter als bei den erfindungsgemäßen Dispersionen. Die Reinigungsfähigkeit der Vergleichsdispersionen 8) ist sehr gut. Aufgrund des sehr hohen Gehaltes an Carboxylgruppen und Neutralisationsmittel ist allerdings die Wasserbeständigkeit entsprechender Lacke und Beschichtungen eingeschränkt.

Die Vergleichsdispersionen 5), 6) und 7) sind zwar festkörperreich, jedoch in der Lagerstabilität und auch in der Reinigungsfähigkeit deutlich schlechter als die erfindungsgemäßen Dispersionen.

## Patentansprüche

**1.** Wäßrige Polyurethandispersionen aus Umsetzungsprodukten von

A) mindestens einem, mindestens difunktionellen Polyol des Molekulargewichtsbereiches 500-6000,

B) mindestens einem, mindestens difunktionellen niedermolekularen Alkohol,

C) mindestens einem, di- und/oder trifunktionellen Isocyanat und

D) mindestens einer Verbindung mit einer Säuregruppe und ein oder zwei Hydroxy- und/oder Aminogruppen in einer Menge die ausreicht, um eine Säurezahl bezogen auf Feststoffgehalt von 12 bis 27 mg KOH/g gewährleisten,

wobei vor dem Dispergieren zugesetztes Neutralisierungsmittel für mindestens 65, höchtens 95 % der Säuregruppen, sowie nach Beenden der Kettenverlängerungsreaktion in wäßriger Dispersion zugesetztes Neutralisationsmittel für dann insgesamt mindestens 115 % der Carboxyl-(Säure)-Gruppen zugegeben wird, sowie 1,0 bis 4,0 %, bezogen auf 100 % Festkörpergehalt, isolierte Harnstoffstrukturen, die in Formel (I) in der eckigen Klammer wiedergegeben sind

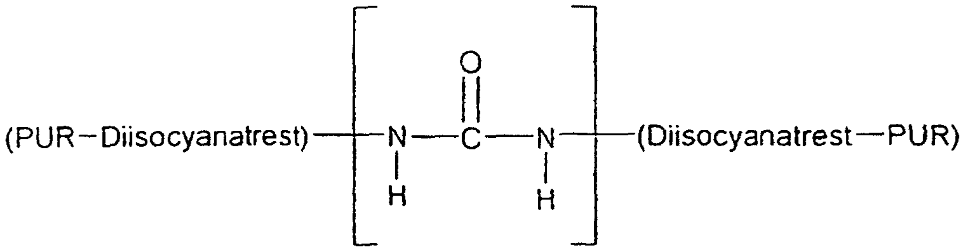 (I),

enthalten.

**2.** Wäßrige Polyurethandispersionen gemäß Anspruch 1, **dadurch gekennzeichnet, daß** der pH-Wert mindestens 7,5 sowie der Festkörpergehalt mindestens 35 % beträgt und daß sie Umsetzungsprodukte enthalten aus

A) 45 bis 75 Gew.-% mindestens eines, mindestens difunktionellen niedermolekularen Polyols des Molekulargewichtsbereiches 500 bis 6000,

B) 1 bis 6 Gew.-% mindestens eines mindestens difunktionellen, niedermolekularen Alkohols des Molekulargwichtes <350,

C) 20 bis 45 Gew.-% mindestens eines di- und/oder trifunktionellen Isocyanates,
und

D) 3 bis 7 Gew.-% Dimethylolpropionsäure und/oder Dimethylolbuttersäure und/oder Hydroxypivalinsäure sowie gegebenenfalls

E) 0 bis 5 Gew.-% nichtionisch-hydrophile, monofunktionelle Polyethylenglykolmonoalkylether mit Molekulargewichten von 350 bis 2500.

**3.** Wäßrige Polurethandispersionen gemäß den Ansprüchen 1 und 2, **gekennzeichnet dadurch, daß** der pH-Wert mindestens 8,5, die Säurezahl 15 bis 25 mg KOH/g Substanz, sowie der Festkörpergehalt mindestens 40 % beträgt und dadurch, daß sie ein Umsetzungsprodukt aus

A) 50 bis 70 Gew.-% mindestens eines difunktionellen Polyesters und/oder Polycarbonates des Molekulargewichtsbereiches 840 bis 2600,

B) 1 bis 4 Gew.-% einer Mischung aus einem difunktionellen und einem trifunktionellen niedermolekularen Alkohols eines Molekulargewichtes < 210,

C) 25 bis 40 Gew.-% Isophorondiisocyanat, und/oder Hexamethylendiisocyanat und/oder 4,4-Diisocyanatodicyclohexylmethan sowie

D) 4 bis 6 Gew.-% Dimethylolpropionsäure und/oder Hydroxypivalinsäure,

sowie vor dem Dispergieren zugesetztes Neutralisationsmittel für mindestens 75, höchtens 95 % der Carboxylgruppen, sowie nach Beenden der Kettenverlängerungsreaktion mit Wasser in wäßriger Dispersion Neutralisationsmittel für dann > 150 % der Carboxylgruppen, sowie 1,75 bis 3,25 %, bezogen auf 100 % Festkörpergehalt, isolierte Harnstoffstrukturen, die in Formel (I) in der eckigen Klammer wiedergegeben sind

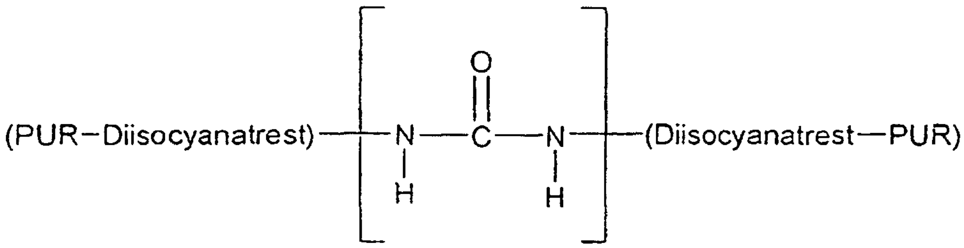 (I),

enthalten.

**4.** Wäßrige Polyurethandisperionen gemäß den Ansprüchen 1 bis 3, **dadurch gekennzeichnet, daß** sie lösemittelfrei sind sowie Neutralisationsmittel für >165 % der Carboxylgruppen enthalten.

**5.** Wäßrige Polyurethandispersionen gemäß den Ansprüchen 1 bis 4, **dadurch gekennzeichnet, daß** die Komponente C) zu mindestens 50 % aus 1-Methyl-2,4(2,6)-Diisocyanatocyclohexan besteht.

**6.** Verfahren zur Herstellung einer Polyurethandispersion gemäß Anspruch 1, **dadurch gekennzeichnet, daß** man

A) mindestens ein, mindestens difunktionellen Polyol des Molekulargewichtsbereiches 500-6000 mit,

B) mindestens einem, mindestens difunktionellen niedermolekularen Alkohol und,

C) mindestens einem, di- und/oder trifunktionellen Isocyanat und

D) mindestens eine Verbindung mit einer Säuregruppe und ein oder zwei Hydroxy- und/oder primäre bzw. sekundäre Aminogruppen in einer Menge, die ausreicht, um eine Säurezahl bezogen auf Feststoffgehalt von 12 bis 27 mg KOH/g gewährleisten,

zu einem NCO-funktionellen Prepolymer umsetzt,
Neutralisationsmittel für mindestens 65, höchstens 95 % der Säuregruppen zugibt, in Wasser dispergiert, eine Kettenverlängerungsreaktion in Wasser durchführt, dann weitere Neutralisierungsmittel für insgesamt mindestens 115 % der Carboxylgruppen zusetzt, gegebenenfalls eingesetztes Lösemittel ganz oder teilweise abdestilliert, so daß eine mindestens 35 %ige Polyurethandispersion resultiert, deren pH-Wert mindestens 7,5 beträgt und die zwischen 1,0 und 4,0 Gew.-%, bezogen auf 100 % Festkörpergehalt der Dispersion, isolierte Hartnstoffstruktureinheiten, die in der Formel (I)

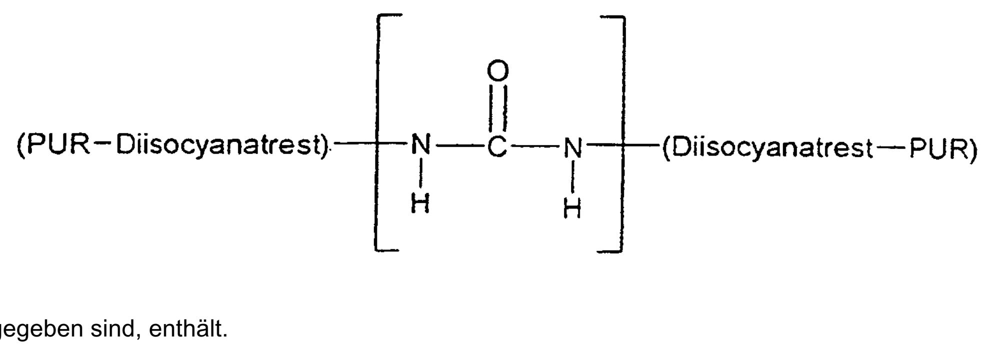 (I),

wiedergegeben sind, enthält.

**7.** Verfahren zur Herstellung von Polyurethandisperionen gemäß den Ansprüchen 3 bis 5, **dadurch gekennzeichnet, daß** man in 50 bis 80 %iger organischer Lösung

A) 50 bis 70 Gew.-% mindestens eines difunktionellen Polyesters und/oder Polycarbonates des Molekulargewichtsbereiches 840 bis 2600, mit

B) 1 bis 4 Gew.-% einer Mischung aus einem difunktionellen und einem trifunktionellen Alkohols des Molekulargewichtes < 210, und

C) 25 bis 40 Gew.-% Isophorondiisocyanat, und/oder Hexamethylen diisocyanat und/oder 4,4-Diisocyanatodicyclohexylmethan und/oder 1-Methyl-2,4(2,6)-Diisocyanatocyclohexan sowie

D) 4 bis 6 Gew.-% Dimethylolpropionsäure und/oder Hydroxypivalinsäure

in einem NCO:OH-Äquivalentverhältnis von 2,2:1 bis 1,25:1 zu einem NCO-funktionellen Prepolymer umsetzt, für mindestens 75, höchtens 95 % der Carboxygruppen Neutralisationsmittel zusetzt, in Wasser dispergiert, eine Kettenverlängerungsreaktion ausschließlich mit Wasser ohne Zusatz von amino- und/oder hydroxyfunktionellen Kettenverlängerungsmittel durchführt, Neutralisationsmittel für dann insgesamt > 150 % der Carboxylgruppen zusetzt, und das eingesetzte Lösemittel soweit destillativ entfernt, daß eine praktisch colöserfreie, mindestens 40 %ige wäßrige Polyurethandispersion resultiert, deren pH-Wert mindestens 8,5 beträgt und die bezogen auf 100 % Festkörpergehalt zwischen 1,75 und 3,25 Gew.-%, isolierte Harnstoffstruktureinheiten die in Formel (I) in der eckigen Klammer wiedergegegeben sind

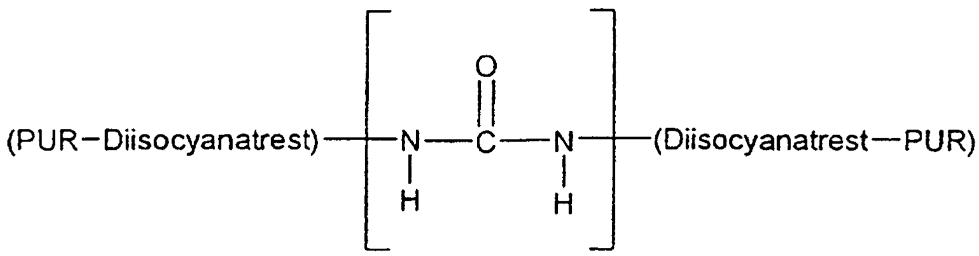
(I),

enthält.

8. Verwendung der Dispersionen gemäß dem Anspruch 1 zur Herstellung von Lacken und Beschichtungen auf beliebige Substraten.

9. Verwendung der Dispersionen gemäß dem Anspruch 1 zur Herstellung von Metallic- oder Uni-Basislacken für die Kunststoff- und/oder Metalllackierung.

10. Wäßrige Beschichtungssysteme mit sehr guter Reinigungsfähigkeit, enthaltend Dispersionen gemäß den Ansprüchen 1 bis 5.

## Claims

1. Aqueous polyurethane dispersions comprising reaction products of

A) at least one at least difunctional polyol of the molecular weight range 500-6000,

B) at least one at least difunctional alcohol of low molecular weight,

C) at least one difunctional and/or trifunctional isocyanate and

D) at least one compound having one acid group and one or two hydroxyl and/or amino groups in an amount sufficient to ensure an acid number, based on solids content, of 12 to 27 mg KOH/g,

with the addition of neutralizing agent, added prior to dispersing, for at least 65% and not more than 95% of the acid groups, and of neutralizing agent, added after the end of the chain extension reaction in aqueous dispersion,

for a total then of at least 115% of the carboxyl (acid) groups, and also comprising 1.0% to 4.0%, based on 100% solids content, of isolated urea structures which are reproduced in formula (I) in the square brackets

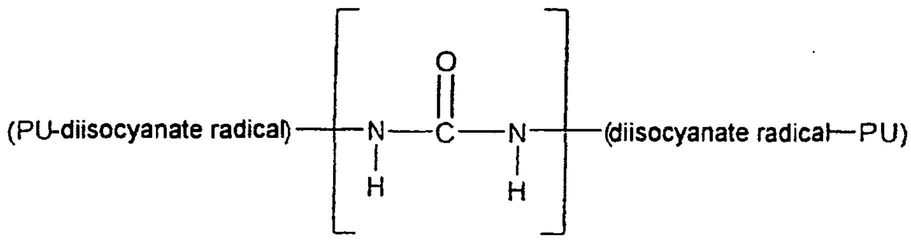

(I),

**2.** Aqueous polyurethane dispersions according to Claim 1, **characterized in that** the pH is at least 7.5 and the solids content is at least 35% and **in that** they comprise reaction products of

A) 45% to 75% by weight of at least one at least difunctional polyol of low molecular weight, of the molecular weight range 500 to 6000,

B) 1% to 6% by weight of at least one at least difunctional alcohol of low molecular weight, of molecular weight < 350,

C) 20% to 45% by weight of at least one difunctional and/or trifunctional isocyanate,
and

D) 3% to 7% by weight of dimethylolpropionic acid and/or dimethylolbutyric acid and/or hydroxypivalic acid and if desired

E) 0% to 5% by weight of nonionically hydrophilic, monofunctional polyethylene glycol monoalkyl ethers having molecular weights of 350 to 2500.

**3.** Aqueous polyurethane dispersions according to Claims 1 and 2, **characterized in that** the pH is at least 8.5, the acid number is 15 to 25 mg KOH/g solids and the solids content is at least 40% and **in that** they comprise a reaction product of

A) 50% to 70% by weight of at least one difunctional polyester and/or polycarbonate of the molecular weight range 840 to 2600,

B) 1% to 4% by weight of a mixture of a difunctional and a trifunctional alcohol of low molecular weight, of molecular weight < 210,

C) 25% to 40% by weight of isophorone diisocyanate, and/or hexamethylene diisocyanate and/or 4,4-diisocyanatodicyclohexylmethane and

D) 4% to 6% by weight of dimethyolpropionic acid and/or hydroxypivalic acid,

and also neutralizing agent, added prior to dispersing, for at least 75% and not more than 95% of the carboxyl groups, and, after the end of the chain extension reaction with water in aqueous dispersion, neutralizing agent for then > 150% of the carboxyl groups, and also 1.75% to 3.25%, based on 100% solids content, of isolated urea structures which are reproduced in formula (I) in the square brackets

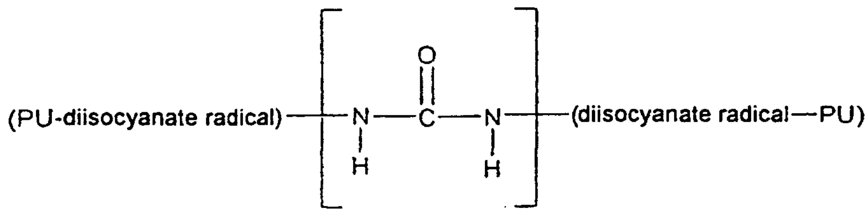 (I),

4. Aqueous polyurethane dispersions according to Claims 1 to 3, **characterized in that** they are solvent-free and comprise neutralizing agents for > 165% of the carboxyl groups.

5. Aqueous polyurethane dispersions according to Claims 1 to 4, **characterized in that** component C) is composed to the extent of at least 50% of 1-methyl-2,4(2,6)-diisocyanatocyclohexane.

6. Process for preparing a polyurethane dispersion according to Claim 1, **characterized in that**

A) at least one at least difunctional polyol of the molecular weight range 500-6000 is reacted with

B) at least one at least difunctional alcohol of low molecular weight and with

C) at least one difunctional and/or trifunctional isocyanate and

D) at least one compound having an acid group and one or two hydroxyl and/or primary and/or secondary amino groups in an amount sufficient to ensure an acid number, based on solids content, of 12 to 27 mg KOH/g,

to give an NCO-functional prepolymer,
neutralizing agent is added for at least 65% and not more than 95% of the acid groups, the prepolymer is dispersed in water, a chain extension reaction in water is carried out, then further neutralizing agents are added for a total of at least 115% of the carboxyl groups, any solvent used is fully or partly distilled off, to give an at least 35% polyurethane dispersion whose pH is at least 7.5 and which contains between 1.0% and 4.0% by weight, based on 100% dispersion solids content, of isolated urea structural units which are reproduced in the formula (I)

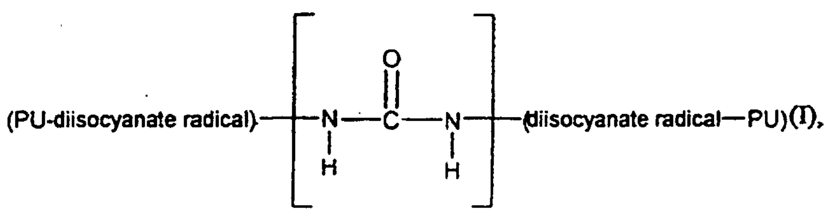 (I),

7. Process for preparing polyurethane dispersions according to Claims 3 to 5, **characterized in that** in 50% to 80% strength organic solution

A) 50% to 70% by weight of at least one difunctional polyester and/or polycarbonate of the molecular weight range 840 to 2600 is reacted with

B) 1% to 4% by weight of a mixture of a difunctional and a trifunctional alcohol of molecular weight < 210 and with

C) 25% to 40% by weight of isophorone diisocyanate, and/or hexamethylene diisocyanate and/or 4,4-diisocyanatodicyclohexylmethane and/or 1-methyl-2,4(2,6)-diisocyanatocyclohexane and also with

D) 4% to 6% by weight of dimethylolpropionic acid and/or hydroxypivalic acid

in an NCO:OH equivalent ratio of 2.2:1 to 1.25:1 to give an NCO-functional prepolymer, neutralizing agent is added for at least 75% and not more than 95% of the carboxyl groups, the prepolymer is dispersed in water, a chain

extension reaction exclusively with water is carried out, without the addition of amino- and/or hydroxy-functional chain extender, neutralizing agent for a total then of > 150% of the carboxyl groups is added, and the solvent used is removed by distillation to an extent such as to give a virtually cosolvent-free, at least 40%, aqueous polyurethane dispersion whose pH is at least 8.5 and which comprises, based on 100% solids content, between 1.75% and 3.25% by weight of isolated urea structural units which are reproduced in the square brackets in formula (I)

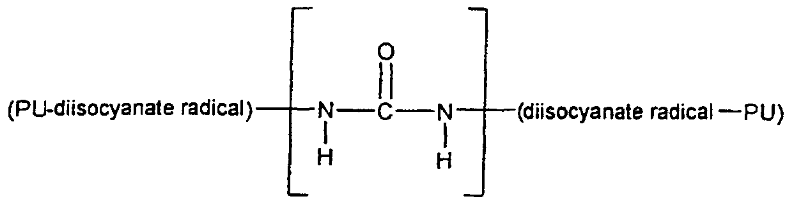
(I),

**8.** Use of the dispersions according to Claim 1 for producing coatings on arbitrary substrates.

**9.** Use of the dispersions according to Claim 1 for preparing metallic or solid-colour basecoat materials for the coating of plastics and/or metals.

**10.** Aqueous coating compositions having very good cleanability, comprising dispersions according to Claims 1 to 5.

**Revendications**

**1.** Dispersions aqueuses de polyuréthanes consistant en produits de réaction de

A) au moins un polyol au moins difonctionnel de poids moléculaire 500 à 6 000,
B) au moins un alcool à bas poids moléculaire au moins difonctionnel,
C) au moins un isocyanate di- et/ou tri-fonctionnel et
D) au moins un composé contenant un groupe acide et un ou deux groupes hydroxy et/ou amino, en quantité suffisante pour assurer un indice d'acide de 12 à 27 mg de KOH/g pour les matières solides,

auxquels on a ajouté, avant la dispersion, un agent neutralisant pour au moins 65 et pour 95 % au maximum des groupes acides et, après la réaction d'allongement des chaînes en dispersion aqueuse, à nouveau un agent neutralisant pour au moins 115 % au total des groupes carboxyle (acides), et qui contiennent 1,0 à 4,0 %, pour 100 % de matières solides, de structures urées isolées, représentées entre crochets dans la formule I

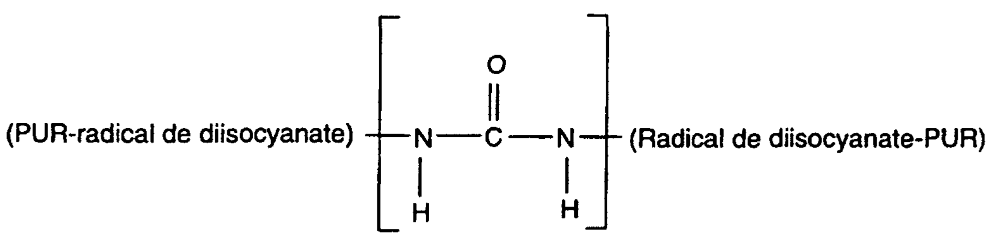
(I)

**2.** Dispersions aqueuses de polyuréthanes selon revendication 1, **caractérisées en ce que** le pH est d'au moins 7,5, la teneur en matières solides d'au moins 35 % et **en ce qu'**elles contiennent des produits de réaction de

A) 45 à 75 % en poids d'au moins un polyol à bas poids moléculaire au moins difonctionnel, de poids moléculaire 500 à 6 000,
B) 1 à 6 % en poids d'au moins un alcool à bas poids moléculaire au moins difonctionnel de poids moléculaire inférieur à 350,
C) 20 à 45 % en poids d'au moins un isocyanate di- et/ou tri-fonctionnel,
et
D) 3 à 7 % en poids d'acide diméthylolpropionique et/ou d'acide diméthylolbutyrique et/ou d'acide hydroxypivalique et le cas échéant

E) 0 à 5 % en poids d'éthers monoalkyliques de polyéthylèneglycols monofonctionnels non ioniques - hydrophiles à des poids moléculaires de 350 à 2 500.

**3.** Dispersions aqueuses de polyuréthanes selon les revendications 1 et 2, **caractérisées en ce que** le pH est d'au moins 8,5, l'indice d'acide est de 15 à 25 mg de KOH/g de substance, la teneur en matières solides est d'au moins 40 % et **en ce qu'**elles contiennent un produit de réaction de

A) 50 à 70 % en poids d'au moins un polyester et/ou polycarbonate difonctionnel, de poids moléculaire 840 à 2 600,
B) 1 à 4 % en poids d'un mélange d'un alcool à bas poids moléculaire difonctionnel et d'un alcool à bas poids moléculaire trifonctionnel, à un poids moléculaire inférieur à 210,
C) 25 à 40 % en poids d'isophoronediisocyanate et/ou d'hexaméthylènediisocyanate et/ou de 4,4-diisocyanatodicyclohexylméthane, et
D) 4 à 6 % en poids d'acide diméthylolpropionique et/ou d'acide hydroxypivalique,

avec un agent neutralisant ajouté avant la dispersion pour au moins 75 et pour 95 % au maximum des groupes carboxyle et un agent neutralisant ajouté après la réaction d'allongement des chaînes avec de l'eau en dispersion aqueuse pour alors plus de 150 % des groupes carboxyle, et contenant 1,75 à 3,25 %, pour 100 % de matières solides, de structures urées isolées représentées entre crochets dans la formule I

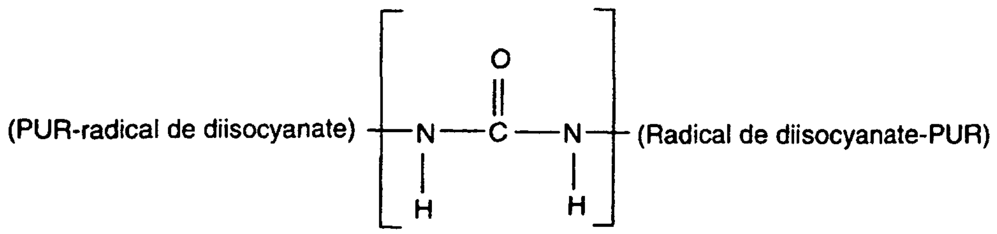
(I)

**4.** Dispersions aqueuses selon les revendications 1 à 3, **caractérisées en ce qu'**elles sont exemptes de solvants et contiennent des agents neutralisants pour plus de 165 % des groupes carboxyle.

**5.** Dispersions aqueuses de polyuréthanes selon les revendications 1 à 4, **caractérisées en ce que** le composant C) consiste pour au moins 50 % en 1-méthyl-2,4(2,6)-diisocyanatocyclohexane.

**6.** Procédé pour la préparation d'une dispersion de polyuréthanes selon revendication 1, **caractérisé en ce que**, par réaction entre

A) au moins un polyol au moins difonctionnel de poids moléculaire 500 à 6 000,
B) au moins un alcool à bas poids moléculaire au moins difonctionnel et
C) au moins un isocyanate di- et/ou tri-fonctionnel et
D) au moins un composé à un groupe acide et un ou deux groupes hydroxy et/ou amino primaires ou secondaires en quantités suffisantes pour assurer un indice d'acide de 12 à 27 mg de KOH/g sur les substances solides,

on forme un prépolymère à fonctions NCO,
on ajoute, en dispersion aqueuse, un agent neutralisant pour au moins 65 et pour 95 % au maximum des groupes acides, on procède à une réaction d'allongement des chaînes dans l'eau, on ajoute ensuite un complément d'agent neutralisant pour au total au moins 115 % des groupes carboxyle, on distille en totalité ou en partie le solvant éventuellement utilisé de manière à obtenir une dispersion de polyuréthane à au moins 35 % dont le pH est d'au moins 7,5 et qui contient de 1,0 à 4,0 % en poids, pour 100 % en poids des matières solides de la dispersion, de motifs de structure d'urées isolées représentées entre crochets dans la formule I

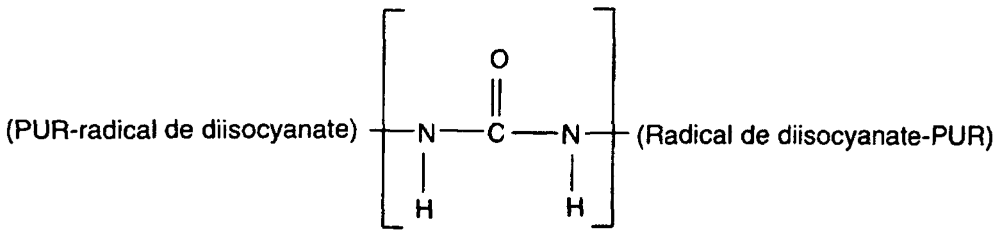 (I)

**7.** Procédé pour la préparation de dispersions de polyuréthanes selon les revendications 3 à 5, **caractérisé en ce que** l'on fait réagir en solution organique à une concentration de 50 à 80 %

A) 50 à 70 % en poids d'au moins un polyester et/ou polycarbonate difonctionnel de poids moléculaire 840 à 2 600, avec
B) 1 à 4 % en poids d'un mélange d'un alcool difonctionnel et d'un alcool trifonctionnel de poids moléculaire inférieur à 210 et
C) 25 à 40 % en poids d'isophoronediisocyanate et/ou d'hexaméthylènediisocyanate et/ou de 4,4-diisocyanatodicyclohexylméthane et/ou de 1-méthyl-2,4(2,6)-diisocyanatocyclohexane et
D) 4 à 6 % en poids d'acide diméthylolpropionique et/ou d'acide hydroxypivalique,

avec un rapport de 2,2 : 1 à 1,25 : 1 entre les équivalents de NCO et les équivalents d'OH, formant ainsi un prépolymère à fonctions NCO, on ajoute un agent neutralisant en dispersion dans l'eau pour au moins 75 et pour 95 % au maximum des groupes carboxy, on procède à une réaction d'allongement des chaînes exclusivement avec l'eau, sans adjonction d'agents d'allongement des chaînes à fonctions amino et/ou hydroxy, on ajoute ensuite un agent neutralisant pour plus de 150 % au total des groupes carboxyle et on élimine le solvant utilisé par distillation de manière à obtenir une dispersion aqueuse de polyuréthane à au moins 40 % et pratiquement exempte de tiers-solvant, à un pH d'au moins 8,5 et qui contient, pour 100 % de matières solides, de 1,75 à 3,25 % en poids de motifs de structures urées isolées représentées entre crochets dans la formule I

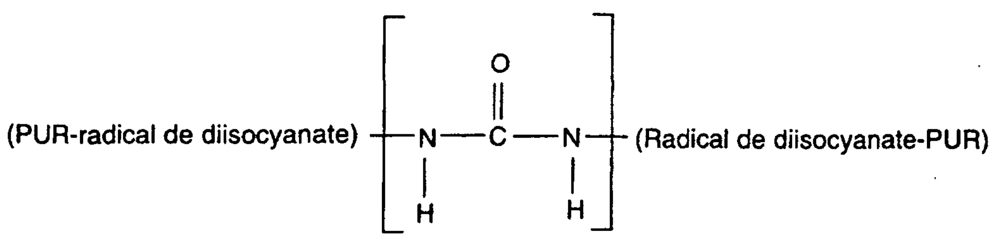 (I)

**8.** Utilisation des dispersions selon revendication 1, pour la préparation de vernis et produits de revêtement pour substrats quelconques.

**9.** Utilisation des dispersions selon revendication 1, pour la préparation de peintures de base métalliques ou unies, pour le revêtement de résines synthétiques et/ou de métaux.

**10.** Produits aqueux de revêtement à très grande facilité de nettoyage, contenant des dispersions selon les revendications 1 à 5.